# EUROPÄISCHE PATENTSCHRIFT

(11) **EP 1 333 919 B1**
(45) Veröffentlichungstag und Bekanntmachung des Hinweises auf die Patenterteilung: **21.04.2004**
(21) Anmeldenummer: 01994610.2
(22) Anmeldetag: 10.10.2001
(51) Int. Cl.: B01J 20/10, A23K 1/175

(54) **VERWENDUNG AKTIVIERTER SCHICHTSILIKATE ZUR MYKOTOXINADSORPTION**
USE OF ACTIVATED LAYERED SILICATES FOR THE ADSORPTION OF MYCOTOXINS
UTILISATION DE SILICATES EN COUCHES ACTIVES POUR L'ADSORPTION DE MYCOTOXINES

(30) Priorität: 15.11.2000 DE 10056634
(43) Veröffentlichungstag der Anmeldung: 13.08.2003
(73) Patentinhaber: SÜD-CHEMIE AG, 80333 München (DE)
(72) Erfinder: SCHALL, Norbert, 85659 Forstern (DE); SIMMLER-HÜBENTHAL, Hubert, 85368 Moosburg (DE)
(74) Vertreter: Westendorp, Michael, Dr.
(86) Internationale Anmeldenummer: PCT/EP2001/011713
(87) Internationale Veröffentlichungsnummer: WO 2002/040150

(56) Entgegenhaltungen:
- WO-A-91/13555
- DE-A- 19 900 813
- US-A- 5 192 547
- US-A- 5 935 623
- LEMKE S L ET AL: "ADSORPTION OF ZEARALENONE BY ORGANOPHILIC MONTMORILLONITE CLAY" JOURNAL OF AGRICULTURAL AND FOOD CHEMISTRY, AMERICAN CHEMICAL SOCIETY. WASHINGTON, US, Bd. 46, Nr. 9, 1998, Seiten 3789-3796, XP000940529 ISSN: 0021-8561 in der Anmeldung erwähnt

## Beschreibung

Die Erfindung betrifft die Verwendung von mit Säure aktivierten Schichtsilicaten zur Adsorption von Toxinen, insbesondere Mykotoxinen in Futtermitteln, ein Verfahren zur Verbesserung der Verwertbarkeit von Mykotoxin-kontaminierten Futtermitteln sowie eine Futtermittelzubereitung, enthaltend das Mykotoxin-Adsorbens.

Unter dem Begriff Mykotoxine wird eine Gruppe von toxischen Substanzen zusammengefasst, die von verschiedenen, natürlich vorkommenden Pilzen gebildet werden. Derzeit sind etwa 300 bis 400 Mykotoxine bekannt. Als natürlicher Lebensraum für diese Pilze werden allgemein Getreidearten und Körnerfrüchte angesehen. Während sich einige Pilzarten bereits auf dem noch abreifenden Getreidekorn in der Ähre entwickeln, befallen andere Arten vornehmlich lagernde Getreide-Futtermittelvorräte, wenn eine gewisse Mindestfeuchte und Umgebungstemperatur gegeben ist.

Alle sog. Mykotoxine haben eine gesundheitsschädliche Wirkung primär auf mit kontaminierten Getreidearten gefütterte landwirtschaftliche Nutztiere, jedoch sekundär über die Nahrungskette auch auf den Menschen.

Weltweit sind mit unterschiedlicher regionaler Ausprägung vor allen Dingen folgende Mykotoxine von Bedeutung in der tierischen aber auch menschlichen Ernährung: Aflatoxin, Ochratoxin, Fumonisin, Zearalenon, Deoxynivalenol, T2-Toxin und Ergotamin. Zur näheren Diskussion dieser sowie weiterer Mykotoxine kann auf die WO 00/41806 der gleichen Anmelderin sowie die dort genannten Fundstellen verwiesen werden.

Durch die Entwicklung empfindlicherer Analysenmethoden konnten in verschiedenen Futtermitteln mehrere unterschiedliche Toxine ermittelt werden, die als Verursacher von gesundheitlichen Problemen bei Mensch und Tier erkannt wurden. Eine Reihe von Studien konnte zeigen, dass mehrere Toxine gleichzeitig z.B. in Futtermitteln vorkommen können. Dieses gleichzeitige Auftreten kann die Toxizität der Mykotoxine erheblich beeinflussen. Neben akuten Schäden an Nutztieren, die mykotoxinkontaminierte Futtermittel erhalten, werden in der Literatur auch gesundheitliche Schäden an Menschen diskutiert, welche durch dauerhafte Aufnahme von schwach mit Mykotoxinen kontaminierten Nahrungsmitteln entstehen.

In einer neueren Untersuchung verdächtiger Futterproben wurden Aflatoxin, Deoxynivalenol oder Fumonisin in über 70% der untersuchten Proben gefunden (vgl. "Understanding and coping with effects of mycotoxins in life dog feed and forage", North Carolina Cooperative Extension Service, North Carolina State Univ.; http:/www.ces.ncsu.edu/drought/dro-29.html).

In vielen Fällen sind die ökonomischen Auswirkungen in Bezug auf eine verringerte Produktivität der Tiere, das verstärkte Auftreten von Krankheiten durch eine Immunsuppression, die Schädigung lebenswichtiger Organe, und die Beeinträchtigung der Reproduktivität größer als die durch den Tod von Tieren durch Mykotoxinvergiftung verursachten Auswirkungen.

Die Gruppe der Aflatoxine wird aufgrund ihrer spezifischen Molekularstruktur mit hoher Spezifität an einige mineralische Adsorbentien wie z.B. Zeolith, Bentonit, Aluminiumsilicat und andere fixiert (vgl. A.-J. Ramos, J. Fink-Gremmels, E. Hernandez, "Prevention of Toxic Effects of Mycotoxins by Means of Nonnutritive Adsorbent Compounds, J. of Food Protection, Bd. 59(6), 1996, S. 631-641).

So beschreibt und beansprucht die US 5,149,549 die Verwendung von Bentonit als Mykotoxin- insbesondere jedoch Aflatoxinadsorbens zur Verwendung in Tierfutter.

Jedoch erfolgt eine Bindung der anderen oben aufgeführten wichtigen Mykotoxine an natürliche, mineralische Adsorbentien mit nur sehr geringer Effektivität. Um die Adsorptionskapazität mineralischer Adsorbentien für diese Nicht-Aflatoxine zu verbessern, wurden verschiedene Arten von Oberflächenmodifikationen an natürlichen Schichtsilicaten vorgeschlagen.

In der WO 91/13555 ist ein trockener teilchenförmiger Tierfutterzusatz beschrieben, der Phyllosilicatteilchen enthält, die mit einem Komplexierungsmittel (sequestering agent), z.B. EDTA beschichtet sind.

S.L. Lemke, P.G. Grant und T.D. Phillips beschreiben in "Adsorption of Zearalenone by Organophilic Montmorillonite Clay", J. Agric. Food Chem. (1998), S. 3789-3796 einen organisch modifizierten (organophilen) Montmorillonit-Ton, der in der Lage ist, Zearalenon zu adsorbieren.

In der WO 00/41806 der gleichen Anmelderin wird ebenfalls eine verbesserte Mykotoxinadsorptionskapazität durch organisch modifizierte (organophile) Schichtsilicate offenbart und beansprucht.

Den organisch modifizierten (organophilen) Adsorbentien ist jedoch gemein, dass sie nur eine Auswahl bestimmter Toxine mit hoher Effektivität binden, während andere Toxine, wie z.B. Fumonisin auch durch eine organophile Oberflächenmodifikation nicht effektiv gebunden werden können.

Die EP 0 721 741 A1 offenbart und beansprucht ein Verfahren und eine Zusammensetzung zur Verbesserung des Nährwerts von mykotoxin-kontaminiertem Tierfutter. Der dabei eingesetzte säureaktivierte Montmorillonit-Ton wird durch Zugabe von Säure zu einer Tonsuspension hergestellt, wobei ein möglichst einheitlich aktiviertes Tonmaterial erzielt werden soll.
Dabei werden etwa 10 bis 35 Gew.-% Säure bei Temperaturen von 80 bis 100°C über mehrere Stunden mit dem Schichtsilicat umgesetzt.

Durch diese Art der sauren Modifikation steigt zwar die Adsorptionsleistung für Toxine, die besonders an saure Oberflächen gebunden werden können (wie z.B. Fumonisin) die Fähigkeit andere Toxine zu binden verringert sich jedoch. Die vorstehende klassische Säureaktivierung ist außerdem ein aufwendiger und daher teurer Prozess.

Aufgabe der Erfindung ist es daher, ein Mykotoxin-Adsorbens bereitzustellen, das die Nachteile des Standes der Technik vermeidet und eine effiziente Adsorption eines möglichst breiten Spektrums verschiedener Mykotoxine ermöglicht, insbesondere die effiziente Adsorption solcher Toxine, die in erster Linie an saure Oberflächen gebunden werden können, (z.B. Fumonisin), ohne gleichzeitig die Bindekapazität für andere Toxine zu verringern.

Diese Aufgabe wird durch die Verwendung eines mit Säure aktivierten Schichtsilicats gemäß Anspruch 1 gelöst.

So wurde überraschend gefunden, dass ein besonders gutes Mykotoxin-Adsorbens erhalten wird, wenn, bezogen auf das Trockengewicht des Schichtsilicats (Schichtsilicat atro), weniger als 10 Gew.-% einer Mineralsäure, vorzugsweise weniger als 8 Gew.-%, insbesondere weniger als 6 Gew.-% einer Säure zur Aktivierung des-Schichtsilicats verwendet werden und eine Aktivierungstemperatur von unter 80°C eingehalten wird.

Es wurde weiterhin gefunden, dass besonders gute Adsorbentien erhalten werden, wenn die Aktivierung durch Besprühen des Ausgangsmaterials mit der Säure erfolgt. Dieser sogenannte Trockenaktivierungsprozess zeichnet sich im Gegensatz zur klassischen Säureaktivierung durch Umsetzung mit Säure in einer Suspension bei hoher Temperatur u.a. dadurch aus, dass keine flüssigen Abwässer entstehen. Gleiches gilt für das Einkneten der erfindungsgemäßen geringen Säuremengen. Der Trockenaktivierungsprozess kann nach einer bevorzugten Ausführungsform bei Raumtemperatur erfolgen.

Nach einer bevorzugten Ausführungsform wird das Schichtsilicat mit etwa etwa nur 0,5 Gew.-% bis 8 Gew.-%, insbesondere 1 bis 6 Gew.-%, besonders bevorzugte etwa 1,5 bis 4 Gew.-% Säure aktiviert.

Die Säureeinwirkungszeit ist von der verwendeten Säuremenge sowie der Aktivierungstemperatur abhängig, wobei in der Regel jedoch Aktivierungszeiten von weniger als zwei Stunden, insbesondere von weniger als 1 Stunde, ausreichend sind.

Als Schichtsilicat kann erfindungsgemäß jedes mit einer Säure aktivierbare Phyllosilicat verwendet werden. Vorzugsweise verwendet man ein Schichtsilicat aus der Smektit-Gruppe, der Serpentin-Kaolin-Gruppe, der Talk-Pyrophylitt-Gruppe, aus der Gruppe der Attapulgite/Palygorskite, Vermiculite, Illite, Sepiolithe und/oder der glimmerartigen Schichtsilicate.

Zu den Schichtsilicaten der Gruppe der Smektite gehören die trioktaedrischen Smektite, wie Saponit und Hectorit, und die dioktaedrischen Smektite, wie Montmorillonit, Beidellit und Nontronit. Zur Serpentin-Kaolin-Gruppe gehören beispielsweise Chrysotil, Antigorit, Kaolinit und Halloysit. Zur Talk-Pyrophyllit-Gruppe gehören der Talk und der Pyrophyllit. Zu der Gruppe der Chlorite gehören die trioktaedrischen und die dioktaedrischen Chlorite.

Besonders bevorzugt werden als Schichtsilicate Montmorillonit-Tone wie Smektite, insbesondere Bentonite sowie Attapulgit und Halloysit sowie deren natürlich vorkommende Gemische.

Nach einer besonders bevorzugten Ausführungsform ist das Schichtsilicat ein Gemisch aus Attapulgit und Bentonit, wobei der Attapulgitanteil weiter bevorzugt zwischen etwa 10 und etwa 90 Gew.-%, insbesondere etwa 20 bis 60 Gew.-%, liegt.

Weiterhin bevorzugt weist das Schichtsilicat ein Porenvolumen im Bereich von 0,1 bis 0,5 cm³/g auf.

Unter den genannten Schichtsilicaten verwendet man als Ausgangsmaterial vorzugsweise ein Schichtsilicat, das in Form einer wässrigen Suspension einen pH-Wert von weniger als 9, vorzugsweise von etwa 4,0 bis 8,0 hat.

Nach einer besonders bevorzugten Ausführungsform wird ein Schichtsilicat mit einer Ionenumtauschfähigkeit (IUF) von mindestens 25 mVal/100 g verwendet.

Vorzugsweise erfolgt die Aktivierung durch gleichmäßiges Besprühen eines pulverförmigen, vorgetrockneten Ausgangsminerales (Restfeuchte ca. 5 bis 10%, vorzugsweise ca. 6 bis 8%) bzw. durch intensives Verkneten des grubenfeuchten Ausgangsminerales mit der (Mineral-)Säure. Es wurde gefunden, dass durch diese Art der Aktivierung, insbesondere durch Besprühen mit einer Säure, besonders vorteilhafte und effiziente Adsorbentien erhalten werden. Prinzipiell kann die Säureaktivierung jedoch auch so durchgeführt werden, dass die Aktivierungssäure einer Suspension des Schichtsilicats zugesetzt wird. In diesem Fall muss jedoch das Wasser nach der Säureaktivierung verdampft werden, wodurch der Energiebedarf des Verfahrens zunimmt. Um einerseits eine gute Vermischung der Aktivierungssäure mit dem Schichtsilicat zu erzielen, und andererseits den Energiebedarf beim Verdampfen des Wassers möglichst gering zu halten, verwendet man vorzugsweise eine Suspension mit einem möglichst hohen Feststoffgehalt, die sich noch gut rühren lässt.

Vorzugsweise wird das säureaktivierte Schichtsilicat vor der Anwendung getrocknet und ggf. weiter zerkleinert.

Nach einer Ausführungsform wird das mit Säure aktivierte Schichtsilicat vor der Verwendung calciniert, z.B. bei einer Temperatur von etwa 200 bis 400°C und ggf. zerkleinert.

Zur Säureaktivierung können allgemein alle starken Säuren eingesetzt werden, insbesondere Schwefelsäure, Phosphorsäure, Salzsäure, Ameisensäure und Zitronensäure.

Vorzugsweise wird eine Mineralsäure, wie Schwefelsäure, Salzsäure, Salpetersäure oder Phosphorsäure verwendet. Besonders bevorzugt ist Schwefelsäure, da diese bei der Säureaktivierung nicht verdampft, so dass die Aktivierung mit einer geringen Menge an Säure durchgeführt werden kann. Daneben sind auch Phosphorsäure und Salzsäure, insbesondere in Gemischen mit Schwefelsäure bevorzugt.

Die zur Kennzeichnung der erfindungsgemäßen Produkte verwendeten physikalischen Merkmale werden wie folgt bestimmt:

### 1. Ionenumtauschfähigkeit (IUF)

Das zu untersuchende Schichtsilicat wird über einen Zeitraum von 2 Stunden bei 150°C getrocknet. Anschließend wird das getrocknete Material mit einem großen Überschuss an wässriger NH₄Cl-Lösung 1 Stunde unter Rückfluss zur Reaktion gebracht. Nach einer Standzeit von 16 Stunden bei Raumtemperatur wird filtriert, worauf der Filterkuchen gewaschen, getrocknet und gemahlen und der NH₄-Gehalt im Schichtsilicat nach Kjeldahl bestimmt wird.

### 2. pH-Wert des Ausgangsmaterials

10 g eines getrockneten Schichtsilicats werden unter Rühren in 100 ml destilliertem Wasser 30 min. suspendiert. Nach dem Absetzen des Schichtsilicats wird der pH-Wert der überstehenden Lösung mit Hilfe einer pH-Elektrode bestimmt.

### 3. Porenvolumen

Das Porenvolumen wird nach CCl₄-Methode bestimmt (H.A. Benesi, R.V. Bonnar, C.F. Lee, Anal. Chem. 27 (1955), Seite 1963.

Zur Ermittlung der Porenvolumina für verschiedene Porendurchmesserbereiche werden definierte partielle CCl₄-Dampfdrucke durch Mischen von CCl₄ mit Paraffin eingestellt.

### 4. Spezifische Oberfläche

Diese wird nach der BET-Methode (Einpunktmethode mit Stickstoff nach DIN 66131) bestimmt.

Es wurde überraschend gefunden, dass die mit verhältnismäßig geringen Mengen an Säure aktivierten Mykotoxin-Adsorbentien sowohl an saure Oberflächen adsorbierbare Toxine, wie Fumonisin, als auch andere Toxine, wie insbesondere Aflatoxine, sehr rasch und stabil adsorbieren können.

Die erfindungsgemäß verwendeten Mykotoxin-Adsorbentien eignen sich insbesondere zur Adsorption von Mykotoxinen aus der Gruppe der Aflatoxine, Ochratoxin, Fumonisin, Zearalenon, Deoxynivalenon und T2-Toxin. Besonders vorteilhaft ist die gleichzeitige effektive Adsorption von Aflatoxinen und Nicht-Aflatoxinen, insbesondere Fumonisinen und Toxinen aus der Gruppe der Trichothecene (Deoxynivalenol, T-2 Toxin und HT-2 Toxin).

Es wird angenommen, ohne dass die Erfindung auf diesen theoretischen Wirkungsmechanismus beschränkt ist, dass durch die Aktivierung mit verhältnismäßig geringen Säuremengen unterschiedliche Oberflächen auf den Schichtsilicatteilchen bereitgestellt werden, die jeweils für unterschiedliche Mykotoxine optimale Adsorptionsbedingungen bieten. Unerwarteterweise wurde im Vergleich zu klassischen, d.h. mit größeren Säuremengen aktivierten Schichtsilicaten und deren Gemischen mit nicht aktivierten Schichtsilicaten eine erhöhte Adsorptionsleistung sowohl für Aflatoxine als auch Nicht-Aflatoxine festgestellt. Es wird angenommen, dass bei der Adsorption der Mykotoxine unterschiedlich stark mit Säure belegte (Ober-)flächen der Schichtsilicatteilchen zusammenwirken, wodurch sich ein synergistischer Effekt ergibt. Es wird weiterhin angenommen, ohne dass die Erfindung hierauf beschränkt wäre, daß zumindest einzelne Teilchen der erfindungsgemäß aktivierten Schichtsilicate in Bezug auf die Säurebelegung einen Gradienten aufweisen, wobei'in erster Linie die nahe an der Teilchenoberfläche gelegenen mehrwertigen Kationen gegen H⁺ ausgetauscht sind. Im Teilcheninneren finden sich jedoch noch genügend mehrwertige Kationen, wie Ca²⁺- und Al³⁺, um auch eine effiziente Adsorption anderer Mykotoxine, z.B. Aflatoxine über Chelatbildung, zu ermöglichen. Im Gegensatz dazu scheint dies bei einer zu starken Säureaktivierung der Schichtsilicate aufgrund der zu starken Veränderung der Struktur und Zusammensetung des Kristallgitters nicht mehr erreichbar.

Nach einer besonders bevorzugten Ausführungsform werden demnach in erster Linie an der Teilchenoberfläche mit Säure aktivierte Schichtsilicate verwendet. D.h. das Schichtsilicat wird so aktiviert, dass in erster Linie die mehrwertigen Kationen nahe an der Oberfläche der Schichtsilicatteilchen, nicht jedoch diejenigen im Kernbereich der Teilchen ausgetauscht werden. Es wurde gefunden, dass durch die geringen Mengen an Säure ein hohes Maß an Oberflächenacidität erzielt wird, wohingegen bei Zugabe höherer Säuremengen die Oberflächenacidität nicht mehr erheblich ansteigt, sondern lediglich die Gesamtacidität, gemessen als Acidität der Tonsuspension zunimmmt.

Nach einem weiteren Aspekt weist das Schichtsilicat eine Ionenumtauschfähigkeit (IUF) von mindestens 25 mVal/g auf, bevorzugt von mindestens 35 mVal/g, besonders bevorzugt mindestens 45 mVal/g.

Es wird angenommen, ohne dass die Erfindung auf diesen theoretischen Mechanismus beschränkt wird, dass die auch nach der Säureaktivierung noch (weitgehend) vorhandene IUF ebenfalls zur effizienten Adsorption der Mykotoxine beiträgt. Dabei werden an der aciden Oberfläche der erfindungsgemäß verwendeten Adsorbentien verschiedene Toxine protoniert und als positiv geladene Verbindungen an den zur Verfügung stehenden Ionenaustauscherplätzen fixiert.

Nach einem weiteren Aspekt umfasst die Mykotoxin-Kontamination zwei oder mehrere Mykotoxine, insbesondere Aflatoxin(e) und mindestens ein weiteres Mykotoxin, wie Fumonisin, Ochratoxin, Deoxynivalenol und/oder T2-Toxin, insbesondere Fumonisin.

Nach einer bevorzugten Ausführungsform werden, bezogen auf die Menge des Mykotoxin-kontaminierten Materials, mindestens 0,01 Gew.-%, vorzugsweise mindestens 0,05 Gew.-%, insbesondere mindestens 0,1 Gew.-%, des mit Säure aktivierten Schichtsilicats verwendet.

Nach einer weiteren vorteilhaften Ausführungsform wird neben dem Schichtsilicat ein zusätzliches Mykotoxin-Adsorbens verwendet. Dabei kann prinzipiell jedes im Stand der Technik bekannte Mykotoxin-Adsorbens verwendet werden. Vorzugsweise handelt es sich um ein organophiles Schichtsilicat und/oder ein nicht mit Säure aktiviertes Schichtsilicat, insbesondere Bentonit.

Nach einer besonders bevorzugten Ausführungsform liegen das säureaktivierte Schichtsilicat und das bzw. die weitere(n) Mykotoxin-Adsorbens (Adsorbentien) im Gemisch vor.

Nach einem weiteren Aspekt betrifft die Erfindung ein Mykotoxin-Adsorbens, enthaltend ein Gemisch aus einem mit Säure aktivierten Schichtsilicat gemäß einem der Ansprüche 1 bis 6 und mindestens einem weiteren Mykotoxin-Adsorbens, ausgewählt aus der Gruppe der nicht mit Säure aktivierten Schichtsilicate und der organophilen Schichtsilicate. Diesem Mineralgemisch können ggf. weitere, zumeist organische Komponenten beigemischt werden, die gemäß dem Stand der Technik in der Lage sind, die Verwertung des komtaminierten Futters zu verbessern, die Gesundheit der Tiere, insbesondere deren Immunsystem, zu stabilisieren oder die Stoffwechselprozesse in positiver Weise zu beeinflussen. Dies können u.a. sein: Vitamine, Enzyme, pflanzliche Bestandteile oder Extrakte sowie andere unter der Bezeichnung Probiotika bekannte Stoffe.

Nach einem anderen Aspekt betrifft die Erfindung eine Futterzubereitung, enthaltend ein mykotoxin-kontaminiertes Tierfutter und ein mit Säure aktiviertes Schichtsilicat wie vorstehend beschrieben, vorzugsweise in einer Menge von mindestens 0,01 Gew.-%, vorzugsweise mindestens 0,05 Gew.-%, insbesondere mindestens 0,1 Gew.-% des kontaminierten Tierfutters.

Schliesslich betrifft die Erfindung nach einem weiteren Aspekt ein Verfahren zur besseren Verwertbarkeit bzw. Verbesserung der Verträglichkeit für Tier und Mensch eines Mykotoxin-kontaminerten Futter- bzw. Nahrungsmittels. Dabei wird ein mit Säure aktiviertes Schichtsilicat wie vorstehend beschrieben vor oder gleichzeitig mit der Aufnahme durch ein Tier zu dem Futtermittel gegeben. Nach diesem erfindungsgemäßen Verfahren kann eine verbesserte Gewichtszunahme beim Verfüttern des mit Säure aktivierten Sichtsilicats mit dem Mykotoxin-kontaminierten Futter bzw. Nahrungsmittel erzielt werden.

Die Erfindung wird nun anhand des nachstehenden Beispiels in nicht beschränkender Weise erläutert:

### Beispiele

### Beispiel 1:

### 1. Saure Aktivierung eines Ca-Bentonit

500 g (atro) südafrikanischer Bentonit (natürlicher Ca-Bentonit) mit einem Wassergehalt von 38 Gew.-%, einer BET-Oberfläche von 63,4 m²/g, einer IUF von 80,0 mVal/100 g, einem pH-Wert von 7,9 und einem Gesamt-Porenvolumen (0-80 nm) von 0,120 ml/g wurde in einem Werner-Pfleiderer-Mischer unter Zugabe von 150 ml destilliertem Wasser und 19,38 g 96%iger H₂SO₄ 10 min bei etwa 30°C verknetet. Das Material wurde bei 120°C getrocknet (bis zu einem Restfeuchtegehalt von 9,5%) und auf einer Retsch-Schlagkreuzmühle (Maschenweite 0,12 mm) gemahlen. Das Mahlgut wies folgende Kenndaten auf:

| | |
|---|---|
| BET-Oberfläche | 58,5 m²/g |
| Porenvolumen | 0,10 ml/g |
| Siebrückstand 63 µm | 28 % |
| IUF | 77 mVal/100g |

Das so erhaltene erfindungsgemäße Material ist nachstehend mit C bezeichnet.

Als Vergleich A wurde der nicht mit Säure aktivierte aber sonst entsprechend verarbeitete Rohbentonit verwendet.

Als Vergleich B wurde der Rohbentonit wie vorstehend aktiviert, wobei jedoch 88,4 g 96%iger H₂SO₄ verwendet wurden und 10 min bei etwa 30 °C verknetet wurde. Das Vermahlen und Sieben erfolgte wie vorstehend angegeben.

Als Vergleich E wurde ein klassisch mit Säure in einer Slurry aktivierter Bentonit, Tonsil Optimum (Süd-Chemie AG), verwendet.

### 2. Saure Aktivierung eines Halloysit

500 g (atro) eines auf ca. 9% Restfeuchte vorgetrockneten, auf einer Retsch-Schlagkreutzmühle (Maschenweite 0,12 mm) vermahlenen mexikanischen Halloysit wurden auf einem Granulierteller über 15 Minuten gleichmäßig mit 3,5% (bezogen auf atro Mineral) einer 96%igen Schwefelsäure besprüht.

Das so hergestellte Produkt wies folgende Kenndaten auf:

| | |
|---|---|
| BET-Oberfläche | 134 m²/g |
| Porenvolumen | 0,31 m²/g |
| IUF | 53 mVal/100g |

Das so erhaltene erfindungsgemäße Material ist nachstehend mit D bezeichnet.

### 3. Überprüfung der Adsorptionseffektivität:

### A) Adsorption

Zur Durchführung der Adsorptionsversuche wurden wässrige Lösungen mit je 2000 ppb der Toxine Aflatoxin B1 und Fumonisin B1 hergestellt. Die Lösungen wurden mittels Citratpuffer auf pH 4,5 eingestellt.

In jeweils 50 ml dieser Lösungen wurden 0,25 g der oben beschriebenen Adsorbentien/Produkte suspendiert und über 2 Stunden bei einer Temperatur von 37°C gerührt. Hierauf wurden die Suspensionen 5 Minuten bei 1500 Upm zentrifugiert und der klare Überstand mittels HPLC-Analytik auf den Restgehalt an nicht adsorbiertem Mykotoxin untersucht. Die Differenz zwischen der vorgelegten Menge an Toxin und der nach der beschriebenen Adsorptionsphase noch in der Lösung verbliebenen Menge an Toxin entspricht der adsorbierten Menge und wird in % der vorgelegten Toxinmenge angegeben.

### B) Desorption

In einem nachgeschalteten Versuch wird die mögliche Desorption der im ersten Schritt adsorbierten Toxine untersucht. Hierzu wird der nach der Zentrifugation der in A beschriebenen Suspension erhaltene Feststoff in 50 ml destilliertem Wasser resuspendiert und auf pH 7 eingestellt. Die nun pH-neutrale Suspension wird wiederum 2 Stunden bei 37°C gerührt und anschließend zentrifugiert. Im klaren Überstand wird die Menge an desorbeirtem Toxin mittels HPLC-Analytik bestimmt. Die Menge an in der Lösung gefundenem Toxin wird in Bezug zur ursprünglich im Adsorptionsversuch eingesetzten Toxinmenge gesetzt und in % desorbiertes Toxin angegeben.

Die in der Tabelle jeweils angegebenen Werte für die effektive Adsorption entsprechen der Differenz aus % adsorbierte Menge minus % desorbierte Menge.

Die HPLC-Bestimmung erfolgte bei den folgenden Bedingungen:

| | **Aflatoxin B1** | **Fumonisin B1** |
|---|---|---|
| Säule | Spherisorb ODS-2 125x4 mm | Lichrosphere 5 RP-18 250x4mm |
| Fließmittel | 600 ml 1 mmol NaCl-Lösung/ | 385 ml Methanol/ |
| | 200 ml Acetonitril/ | 115 ml 0,1 M NaH₂PO₄ |
| | 200 ml Methanol | mit H₃PO₄ auf pH 3,35 |
| | | einstellen |
| Flussrate | 1,5 ml/min | 1 ml/min |
| Detektor | Fluoreszenz | Fluoreszenz |
| Wellenlänge | EX 365 nm / EM 455 nm | EX 335 nm / EM 440 nm |
| Ofentemp. | 35°C | 40°C |
| Injektionsvolumen | 100 µl | 100 µl |

Die so erhaltenen effektiven Adsorptionswerte (% Adsorption - % Desorption) sind in Tabelle I zusammengefasst.

Einige Eigenschaften der verwendeten Materialien sind in Tab. II zusammengefasst.

**Tabelle I**

| **Mykotoxin** | | **Effektive Adsorption (%)** | | | | |
|---|---|---|---|---|---|---|
| | | **A** | **B** | **C** | **D** | **E** |
| Aflatoxin B1 | pH 7 | 91,3 | 78,4 | 95,8 | 97,3 | 56,5 |
| Aflatoxin B1 | pH 4 | 96,5 | 80,6 | 97,5 | 98,6 | 64,0 |
| | | | | | | |
| Fumonisin | pH 7 | 9,2 | 92,7 | 92,0 | 93,1 | 92,4 |
| Fumonisin | pH 4 | 13,4 | 94,9 | 94,7 | 95,8 | 94,1 |

**Tabelle II**

| **Materialien** | | **BET-Oberfläche** **m**^{**2**}**/g** | **Porenvolumen** **ml/g** | **IUF** **mVal/100g** |
|---|---|---|---|---|
| A | Rohbentonit Südafrika | 63 | 0,12 | 80 |
| B | A + 14% H₂SO₄ eingeknetet | 45 | 0,08 | 52 |
| C | A + 3,5% eingeknetet | 58 | 0,1 | 77 |
| D | Halloysit Mexico + 3,5% H₂SO₄ aufgesprüht (Rohmat. Halloysit Mexico) | 134 | 0,22 | 53 |
| E | Tonsil Optimum 210 FF (klassische Slurryakt.) | 200 | 0,29 | 16 |

Aus der Tabelle I ist ersichtlich, dass die erfindungsgemäßen Mykotoxin-Adsorbentien C und D sowohl das Aflatoxin als auch das Nicht-Aflatoxin Fumonisin hervorragend adsorbierten. Überraschenderweise lag die effektive Adsorptionsrate des erfindungsgemäßen Mykotoxin-Adsorbens C für das Aflatoxin sogar über derjenigen des natürlichen (nicht mit Säure aktivierten) Bentonits A, und die für Fumonisin über derjenigen des mit größeren Säuremengen aktivierten Bentonits B. Dies war umso unerwarteter, als gemäß Stand der Technik Aflatoxine besonders gut an nicht mit Säure aktivierte Schichtsilicate adsorbieren, und z.B. Fumonisin besonders gut an klassische (einheitlich) säureaktivierte Schichtsilicate adsorbieren.

## Patentansprüche

1. Verwendung eines mit Säure aktivierten Schichtsilikats zur Adsorption von Mykotoxinen, **dadurch gekennzeichnet, dass** das Schichtsilikat mit weniger als 10 Gew.-%, bezogen auf das Schichtsilikat, einer Säure, ausgewählt aus Schwefelsäure, Salzsäure, Salpetersäure und Phosphorsäure, bei einer Temperatur unter 80°C aktiviert wird.

2. Verwendung nach Anspruch 1, **dadurch gekennzeichnet, dass** das Schichtsilicat mit 0,5 bis 8 Gew.-%, insbesondere 1 bis 6 Gew.-%, besonders bevorzugt 1,5 bis 4 Gew.-% Säure aktiviert wird.

3. Verwendung nach Anspruch 1 oder 2, **dadurch gekennzeichnet, dass** die Aktivierung durch Besprühen des Schichtsilicats mit einer Säure bzw. Säurelösung oder Einkneten der Säure erfolgt.

4. Verwendung nach einem der vorstehenden Ansprüche, **dadurch gekennzeichnet, dass** die Säureaktivierung über weniger als 2 Stunden, insbesondere über weniger als 1 Stunde, bei einer Temperatur zwischen Raumtemperatur (20°C) und 60°C durchgeführt wird.

5. Verwendung nach einem der vorstehenden Ansprüche, **dadurch gekennzeichnet, dass** das mit Säure aktivierte Schichtsilicat bei Futtermitteln eingesetzt wird.

6. Verwendung nach einem der vorstehenden Ansprüche, **dadurch gekennzeichnet, dass** das Schichtsilicat aus der Smektit-Gruppe, der Attapulgit/Palygorskit-Gruppe, der Gruppe der Vermiculite, Illite, der Serpentin-Kaolin-Gruppe, der Talk-Pyrophyllit-Gruppe und/oder der glimmerartigen Schichtsilicate ausgewählt wird.

7. Verwendung nach einem der vorstehenden Ansprüche, **dadurch gekennzeichnet, dass** das Schichtsilicat einen Montmorillonit-Ton, insbesondere einen Bentonit sowie natürliche Gemische mit Attapulgit sowie Halloysit umfasst.

8. Verwendung nach einem der vorstehenden Ansprüche, **dadurch gekennzeichnet, dass** das Schichtsilicat eine Ionenumtauschfähigkeit (IUF) von mindestens 25 mVal/g aufweist.

9. Verwendung nach einem der vorstehenden Ansprüche, **dadurch gekennzeichnet, dass** das mit Säure aktivierte Schichtsilicat vor der Verwendung bei einer Temperatur von 200 bis 400°C calciniert und ggf.-zerkleinert wird.

10. Verwendung nach einem der vorstehenden Ansprüche, **dadurch gekennzeichnet, dass** neben dem mit Säure aktivierten Schichtsilicat gemäß den vorstehenden Ansprüchen mindestens ein weiteres Mykotoxin-Adsorbens verwendet wird.

11. Verwendung nach Anspruch 10, **dadurch gekennzeichnet, dass** das bzw. die weiteren Mykotoxin-Adsorbentien ein Schichtsilicat, insbesondere einen Montmorillonit-Ton, vorzugsweise einen Bentonit umfassen.

12. Verwendung nach Anspruch 11, **dadurch gekennzeichnet, dass** es sich bei dem Schichtsilicat um ein nicht mit Säure aktiviertes Schichtsilicat, insbesondere einen Ca- oder Na-Bentonit und/oder ein organophiles Schichtsilicat, insbesondere einen organophilen Bentonit handelt.

13. Verwendung nach einem der vorstehenden Ansprüche, **dadurch gekennzeichnet, dass** die verwendeten Mykotoxin-Adsorbentien im Gemisch vorliegen.

14. Verwendung nach einem der vorstehenden Ansprüche, **dadurch gekennzeichnet, dass** die zu adsorbierenden Mykotoxine ein oder mehrere Toxine umfassen, ausgewählt aus der Gruppe der Aflatoxine, Citrinin, Cyclopiazonsäure, Ochratoxin, Patulin, Vertreter der Trichothecene wie Nivalenol, Deoxynivalenol, T-2 Toxin, HT-2 Tosin, Fumonisine, Zearalenon und Ergotalkaloide.

15. Verwendung nach einem der vorstehenden Ansprüche, **dadurch gekennzeichnet, dass** die zu adsorbierenden Mykotoxine neben Aflatoxin(en) noch weitere Toxine wie Ochratoxin, Fumonisin, Zearalenon, Deoxynivalenol und/oder T2- bzw. T2 ähnliche Toxine umfassen.

16. Verwendung nach einem der vorstehenden Ansprüche, **dadurch gekennzeichnet, dass**, bezogen auf die Menge des Mykotoxin-kontaminierten Materials, mindestens 0,01 Gew.-%, vorzugsweise mindestens 0,05 Gew.-%, insbesondere mindestens 0,1 Gew.-%, des mit Säure aktivierten Schichtsilicats verwendet werden.

17. Mykotoxin-Adsorbens, enthaltend ein Gemisch aus einem mit Säure aktivierten Schichtsilicat gemäß einem der Ansprüche 1 bis 9 und mindestens einem weiteren Mykotoxin-Adsorbens, ausgewählt aus der Gruppe der nicht mit Säure aktivierten Schichtsilicate und der organophilen Schichtsilicate.

18. Mykotoxin-Adsorbens gemäß Anspruch 17, weiterhin enthaltend organische, zur Adsorption von Mykotoxinen geeignete Verbindungen wie Ionenaustauscher oder Aktivkohle, sowie ggf. organische Verbindungen, die eine verbesserte Ausnutzung von mykotoxinhaltigen Futtermitteln ermöglichen bzw. die Stoffwechselprozesse im Tier stabilisieren, wie Vitamine, Spurennährstoffe und Probiotika.

19. Futterzubereitung, enthaltend ein mykotoxin-kontaminiertes Tierfutter und ein mit Säure aktiviertes Schichtsilicat gemäß einem der Ansprüche 1 bis 9, vorzugsweise in einer Menge gemäß Anspruch 16.

20. Verfahren zur Verbesserung der Verwertbarkeit eines Mykotoxin-kontaminierten Futtermittels, **dadurch gekennzeichnet, dass** ein mit Säure aktiviertes Schichtsilicat gemäß einem der Ansprüche 1 bis 9 vor oder gleichzeitig mit der Aufnahme durch ein Tier zu dem Futtermittel gegeben wird.

## Claims

1. Use of an acid-activated phyllosilicate for adsorbing mycotoxins, **characterised in that** the phyllosilicate is activated at a temperature of below 80°C with less than 10 wt.%, relative to the phyllosilicate, of an acid, selected from among sulfuric acid, hydrochloric acid, nitric acid and phosphoric acid.

2. Use according to claim 1, **characterised in that** the phyllosilicate is activated with 0.5 to 8 wt.%, in particular 1 to 6 wt.%, particularly preferably 1.5 to 4 wt.% of acid.

3. Use according to claim 1 or 2, **characterised in that** activation proceeds by spraying the phyllosilicate with an acid or acid solution or by incorporating the acid by kneading.

4. Use according to one of the preceding claims, **characterised in that** acid activation is performed in less than 2 hours, in particular in less than 1 hour, at a temperature between room temperature (20°C) and 60°C.

5. Use according to one of the preceding claims, **characterised in that** the acid-activated phyllosilicate is used in feedstuffs.

6. Use according to one of the preceding claims, **characterised in that** the phyllosilicate is selected from the smectite group, the attapulgite/palygorskite group, the group of vermiculites, illites, the serpentine/kaolin group, the talcum/pyrophyllite group and/or mica-like phyllosilicates.

7. Use according to one of the preceding claims, **characterised in that** the phyllosilicate comprises a montmorillonite clay, in particular a bentonite and natural mixtures with attapulgite and halloysite.

8. Use according to one of the preceding claims, **characterised in that** the phyllosilicate has an ionexchange capacity (IEC) of at least 25 mVal/g.

9. Use according to one of the preceding claims, **characterised in that**, prior to use, the acid-activated phyllosilicate is calcined at a temperature of 200 to 400°C and is optionally comminuted.

10. Use according to one of the preceding claims, **characterised in** at least one further mycotoxin adsorbent is used together with the acid-activated phyllosilicate according to the preceding claims.

11. Use according to claim 10, **characterised in that** the further mycotoxin adsorbent(s) comprise a phyllosilicate, in particular a montmorillonite clay, preferably a bentonite.

12. Use according to claim 11, **characterised in that** the phyllosilicate comprises a phyllosilicate which has not been acid-activated, in particular a Ca or Na bentonite and/or an organophilic phyllosilicate, in particular an organophilic bentonite.

13. Use according to one of the preceding claims, **characterised in that** the mycotoxin adsorbents used are present as a mixture.

14. Use according to one of the preceding claims, **characterised in that** the mycotoxins to be adsorbed comprise one or more toxins selected from among the group of aflatoxins, citrinine, cyclopiazonic acid, ochratoxin, patuline, representatives of the trichothecenes such as nivalenol, deoxynivalenol, T-2 toxin, HT-2 toxin, fumonisines, zearalenone and ergot alkaloids.

15. Use according to one of the preceding claims, **characterised in that**, apart from aflatoxin, the mycotoxins to be adsorbed comprise further toxins such as ochratoxin, fumonisine, zearalenone, deoxynivalenol and/or T2 or T2-like toxins.

16. Use according to one of the preceding claims, **characterised in that**, relative to the quantity of mycotoxin-contaminated material, the acid-activated phyllosilicate is used in a quantity of at least 0.01 wt.%, preferably at least 0.05 wt.%, in particular at least 0.1 wt.%.

17. A mycotoxin adsorbent containing a mixture of an acid-activated phyllosilicate according to one of claims 1 to 9 and at least one further mycotoxin adsorbent selected from among the group of phyllosilicates which have not been acid-activated and organophilic phyllosilicates.

18. A mycotoxin adsorbent according to claim 17, furthermore containing organic compounds suitable for adsorbing mycotoxins, such as ion exchangers or activated carbon, and optionally organic compounds which enable improved utilisation of feedstuffs containing mycotoxins or which stabilise metabolic processes in the animal, such as vitamins, trace nutrients and probiotics.

19. A feed preparation containing a mycotoxin-contaminated animal feed and an acid-activated phyllosilicate according to one of claims 1 to 9, preferably in a quantity according to claim 16.

20. A process for improving the utilisability of a mycotoxin-contaminated feedstuff, **characterised in that** an acid-activated phyllosilicate according to one of claims 1 to 9 is added to the feedstuff prior to or at the same time as intake by an animal.

## Revendications

1. Utilisation d'un phyllosilicate activé par un acide pour l'adsorption de mycotoxines, **caractérisée en ce que** le phyllosilicate est activé avec moins de 10% en poids, par rapport au phyllosilicate, d'un acide choisi parmi l'acide sulfurique, l'acide chlorhydrique, l'acide nitrique et l'acide phosphorique à une température inférieure à 80°C.

2. Utilisation selon la revendication 1, **caractérisée en ce que** le phyllosilicate est activé avec 0,5 à 8% en poids, en particulier 1 à 6% en poids, de manière particulièrement préférée 1,5 à 4% en poids, d'acide.

3. Utilisation selon la revendication 1 ou 2, **caractérisée en ce que** l'activation est réalisée en aspergeant le phyllosilicate avec un acide ou une solution d'acide ou en incorporant l'acide par malaxage.

4. Utilisation selon l'une quelconque des revendications précédentes, **caractérisée en ce que** l'activation par l'acide est réalisée pendant moins de 2 heures, en particulier pendant moins d'une heure à une température comprise entre la température ambiante (20°C) et 60°C.

5. Utilisation selon l'une quelconque des revendications précédentes, **caractérisée en ce que** le phyllosilicate activé avec l'acide est utilisé dans les fourrages.

6. Utilisation selon l'une quelconque des revendications précédentes, **caractérisée en ce que** le phyllosilicate est choisi dans le groupe des smectites, des attapulgites/palygorskites, le groupe des vermiculites, les illites, le groupe de la serpentine et du kaolin, le groupe du talc et de la pyrophyllite et/ou les phyllosilicates de type mica.

7. Utilisation selon l'une quelconque des revendications précédentes, **caractérisée en ce que** le phyllosilicate comprend une argile montmorillonite, en particulier une bentonite ainsi que des mélanges naturels avec de l'attapulgite ainsi que de l'halloysite.

8. Utilisation selon l'une quelconque des revendications précédentes, **caractérisée en ce que** le phyllosilicate présente une capacité d'échange d'ions (CEI) d'au moins 25 méquiv/g.

9. Utilisation selon l'une quelconque des revendications précédentes, **caractérisée en ce que** le phyllosilicate activé par un acide est calciné, avant utilisation, à une température de 200 à 400°C et est le cas échéant broyé.

10. Utilisation selon l'une quelconque des revendications précédentes, **caractérisée en ce qu'**on utilise au moins un autre adsorbant de mycotoxines en plus du phyllosilicate activé par un acide selon les revendications précédentes.

11. Utilisation selon la revendication 10, **caractérisée en ce que** le ou les autres adsorbants de mycotoxines comprennent un phyllosilicate, en particulier une argile montmorillonite, de préférence une bentonite.

12. Utilisation selon la revendication 11, **caractérisée en ce que** le phyllosilicate est un phyllosilicate non activé par un acide, en particulier une bentonite de Ca ou de Na et/ou un phyllosilicate organophile, en particulier une bentonite organophile.

13. Utilisation selon l'une quelconque des revendications précédentes, **caractérisée en ce que** les adsorbants de mycotoxines utilisés sont sous forme de mélange.

14. Utilisation selon l'une quelconque des revendications précédentes, **caractérisée en ce que** les mycotoxines à adsorber comprennent une ou plusieurs toxines, choisies dans le groupe constitué par les aflatoxines, la citrinine, l'acide cyclopiazonique, l'ochratoxine, la patuline, les représentants des trichothécènes, tels que le nivalénol, le désoxynivalénol, la toxine T-2, la toxine HT-2, la fumosinine, la zéaralénone et les alcaloïdes du seigle.

15. Utilisation selon l'une quelconque des revendications précédentes, **caractérisée en ce que** les mycotoxines à adsorber comprennent, outre les aflatoxines, d'autres toxines telles que l'ochratoxine, la fumonisine, la zéaralénone, le désoxynivalénol et/ou les toxines T2 ou analogues à celles-ci.

16. Utilisation selon l'une quelconque des revendications précédentes, **caractérisée en ce qu'**on utilise, par rapport au matériau contaminé par les mycotoxines, au moins 0,01% en poids, de préférence au moins 0,05% en poids, en particulier au moins 0,1% en poids de phyllosilicate activé avec un acide.

17. Adsorbant de mycotoxines, contenant un mélange d'un phyllosilicate activé par un acide selon l'une quelconque des revendications 1 à 9 et au moins un autre adsorbant de mycotoxines choisi dans le groupe des phyllosilicates non activés par un acide et des phyllosilicates organophiles.

18. Adsorbant de mycotoxines selon la revendication 17, contenant en outre des composés organiques appropriés pour l'adsorption de mycotoxines tels que des échangeurs d'ions ou du charbon actif, ainsi que, le cas échéant, des composés organiques qui permettent une meilleure utilisation de fourrages contenant des mycotoxines ou qui stabilisent les processus métaboliques chez l'animal, tels que des vitamines, des oligo-éléments et des probiotiques.

19. Composition fourragère, contenant un fourrage contaminé par des mycotoxines et un phyllosilicate activé par un acide selon l'une quelconque des revendications 1 à 9, de préférence en une quantité selon la revendication 16.

20. Procédé pour améliorer la valorisation d'un fourrage contaminé par des mycotoxines, **caractérisé en ce qu'**un phyllosilicate activé par un acide selon l'une quelconque des revendications 1 à 9 est ajouté au fourrage avant ou pendant l'ingestion de celui-ci par un animal.
